Europäisches Patentamt

European Patent Office

Office européen des brevets

(11) Veröffentlichungsnummer: **0 010 683**
**B1**

(19)

(12) **EUROPÄISCHE PATENTSCHRIFT**

(45) Veröffentlichungstag der Patentschrift:
26.05.82

(21) Anmeldenummer: 79103995.1

(22) Anmeldetag: 16.10.79

(51) Int. Cl.³: **H 01 F 7/16**, F 16 K 31/06,
B 60 H 1/00

(54) **Wassersteuerventil für eine Kraftfahrzeug-Klimaanlage, insbesondere Heizungsanlage, sowie Verfahren zu dessen Herstellung, insbesondere Justierung.**

(30) Priorität: 03.11.78 DE 2847748

(43) Veröffentlichungstag der Anmeldung:
14.05.80 Patentblatt 80/10

(45) Bekanntmachung des Hinweises auf die Patenterteilung:
26.05.82 Patentblatt 82/21

(84) Benannte Vertragsstaaten:
DE FR GB IT SE

(56) Entgegenhaltungen:
CH-A-396 551
FR-A-1 428 116
FR-A-2 124 640

(73) Patentinhaber: ROBERT BOSCH GMBH, Postfach 50,
D-7000 Stuttgart 1 (DE)

(72) Erfinder: Hertfelder, Wilhelm, Lindenstrasse 16,
D-7031 Steinenbronn (DE)
Erfinder: Junginger, Erich, Ing.-grad., Seyfferstrasse 75,
D-7000 Stuttgart 1 (DE)

# Wassersteuerventil für eine Kraftfahrzeug-Klimaanlage, insbesondere Heizungsanlage, sowie Verfahren zu dessen Herstellung, insbesondere Justierung

## Stand der Technik

Die Erfindung geht aus von einem Wassersteuerventil für eine Kraftfahrzeug-Klimaanlage, insbesondere Heizungsanlage, nach der Gattung des Hauptanspruchs. Ein bekanntes Heizwassersteuerventil dieser Art (DE-OS 2 531 015) arbeitet mit Servounterstützung, und zwar durch Unterdruck. Weitere Einzelheiten dieses bekannten Wassersteuerventils sind der genannten Schrift zu entnehmen, auf die zur Vermeidung von Wiederholungen hiermit Bezug genommen ist. Bei Kraftfahrzeug-Klimaanlagen, insbesondere Heizungsanlagen, wird der Wasserzufluss zum Wärmetauscher in Abhängigkeit von der Innenraumtemperatur des Fahrzeuges und der Wärmetauschertemperatur geregelt. Dies erfordert als Stellglied ein Wassersteuerventil, welches die vom Regler zugeführten Regelimpulse mit der kleinstmöglichen Verzögerung ausführt. Besonders bei geteilten Heizwasserkreisläufen, also einem für die linke Fahrzeugseite und einem davon getrennten für die rechte Fahrzeugseite, ist die für die Heizung zur Verfügung stehende Wassermenge nur halb so gross je Heizkreis. Dadurch ist eine besonders grosse Ansprechempfindlichkeit für feinste Dosierung notwendig. Angestrebt wird ferner, dass die beim Fahrbetrieb ständig wechselnden Bedingungen, wie Wasserdruck und Systemdruck, einen so kleinen Einfluss auf das Wassersteuerventil wie irgend möglich haben sollen, also letzteres wenn möglich überhaupt nicht beeinflussen sollen. Vorrangig ist natürlich, dass die Gefahr von Undichtigkeiten und möglicherweise einhergehenden, überraschenden und für das gesamte Kühlsystem schädlichen Lecks mit Wasserverlust zuverlässig gebannt sein muss. Ferner muss das Wassersteuerventil auch bei im Kühlwasserkreislauf und damit auch im Heizungskreislauf vorhandenen Verunreinigungen, wie Schmutz, Sand od.dgl., ungestört funktionssicher arbeiten. Das Wassersteuerventil soll in der geöffneten Ventilstellung stromlos sein. Der Energiebedarf des Elektromagneten soll für eine möglichst preisgünstige Auslegung der Temperaturregeleinrichtung äusserst gering sein. Bei allem soll das Wassersteuerventil eine kompakte, preisgünstige Baueinheit geringen Gewichts und ausserordentlich hoher Funktionssicherheit bilden. Alle diese Kriterien erfüllt das bekannte Wassersteuerventil vorgenannter Art nicht.

Bei einem aus der FR-PS 2 124 640 bekannten Magnetventil zur Abgasrückführung bei Brennkraftmaschinen, das einige konstruktive Übereinstimmungen mit dem erfindungsgemässen Warmwasserventil aufweist, ist der Abstand des Ventilglieds zum Tauchanker des Elektromagneten verstellbar. Dazu trägt die im Tauchanker befestigte Ventilstange ein Aussengewinde, auf das ein Innengewinde tragende Ventilglied aufgeschraubt ist. Der Magnetkern ist unverschieblich fest im Gehäuse des Ventils angebracht. Bei diesem Ventil kann so der im erregten Zustand, in dem das Ventil geschlossen ist, erforderliche Abstand zwischen dem Tauchanker und dem Magnetkern eingestellt werden. Es liegt auf der Hand, dass dieses Verfahren umständlich und teuer ist.

Der Innenraum dieses Ventils ist mit dem zu steuernden Medium – hier Abgas einer Brennkraftmaschine – gefüllt. Probleme, die sich durch die Bewegung des Tauchankers im mediumgefüllten Innenraum des Ventils ergeben können, sind bei dieser Konstruktion nicht bedacht worden. Ein aus der CH-PS 396 551 bekannter Elektromagnet zur Betätigung von Hydraulikschieberventilen, bei dem der Magnetanker frei schwimmend im Hydrauliköl angeordnet ist, weist der in eine Führungshülse im Inneren des Elektromagneten eintauchende Tauchanker axial verlaufende Ölumlaufnuten auf. Der Abstand zwischen dem zu bewegenden Ventilkolben 7 und dem Magnetanker ist bei diesem Ventil unveränderlich.

## Vorteile der Erfindung

Das erfindungsgemässe Wassersteuerventil mit den kennzeichnenden Merkmalen des Hauptanspruchs hat demgegenüber folgende Vorteile. Der Magnetkern lässt sich gegenüber der Führungshülse leicht in seine optimale Stellung bringen. Die Art der Einstellbarkeit erlaubt dabei eine weitgehend automatisierte Fertigung des Wassersteuerventils. Dabei ergibt sich ein Ventil, das sich bei nichterregtem Elektromagneten in seiner Öffnungsstellung befindet, in der es auch für den Notfall, dass die Öffnungsfeder brechen sollte, gehalten werden kann. Soll das Ventil geschlossen werden, so wird der Elektromagnet erregt. Es erfolgt dann eine schnelle Schliessbewegung. Der Energiebedarf des Elektromagneten zum Schliessen des Ventils ist sehr gering. Die Temperaturregeleinrichtung kann daher preisgünstig in der Endstufe ihrer Elektronik ausgelegt werden. Dadurch, dass der Axialabstand zwischen Tauchanker und Magnetkern bei geöffnetem Ventil bereits so klein wie möglich eingestellt ist, kann die Leistung des Elektromagneten noch besser ausgenutzt werden. Da bei Magnetventilen die Schliesskraft den zu steuernden Ventilquerschnitt bestimmt, kann letzterer somit wesentlich erhöht werden, oder anders betrachtet, die Leistungsaufnahme und Baugrösse des Elektromagneten bei gleichem Ventilquerschnitt verringert werden. Infolge des sich im Schliesszustand ergebenden, sehr kleinen Axialabstandes zwischen Tauchanker und Magnetkern ergibt sich bei ermöglichter, hoher Leistung des Elektromagneten eine Fertigungsvereinfachung durch Toleranzauflockerungen bei der Herstellung. Zugleich ist sichergestellt, dass mehrere eingebaute Wassersteuerventile erfindungsgemässer Art, die mit gleichen Regelimpulsen beaufschlagt werden, auch gleichmässig und parallel zueinander arbeiten. Erreicht ist ferner eine grosse Ansprechempfindlichkeit mit feinster Dosierung. Selbst im Kühlwasserkreislauf und Heizkreislauf vorhandene Verunreinigungen, wie Schmutz, Sand od. dgl., behindern den störungsfreien Betrieb nicht. Bei allem ist das Wassersteuerventil kompakt, preisgünstig, geringen Gewichts und hoher Funktionssicherheit. Es ermöglicht einen ausserordentlich hohen Wirkungsgrad bei niedriger Leistungsaufnahme des Elektromagneten.

Durch die in den Unteransprüchen aufgeführten Massnahmen sind vorteilhafte Weiterbildungen und Verbesserungen des im Hauptanspruch angegebenen Wassersteuerventils möglich.

Von Vorteil ist die Wahl der Haltekraft nach Anspruch 2. Diese wird beim Normalbetrieb, also Öffnen und Schliessen, des Steuerventils nicht erreicht.

Weitere, vorteilhafte Ausführungsformen enthalten die Ansprüche 3, 4 und 5. Dadurch ist eine sehr einfache verschiebesichere Halterung des Magnetkernes in der Führungshülse erreicht, die, sollte die Losbrechkraft des Magnetkernes als nicht sicher genug erscheinen, noch durch das zusätzliche Sicherungsmittel nach Anspruch 4 verstärkt werden kann. Dann verhindert die Massnahme nach Anspruch 5, dass das vor Aushärten flüssige Sicherungsmittel in den Bereich des Tauchankers gelangen und letzteren blockieren kann.

Von Vorteil sind ferner die Gestaltungen nach den Ansprüchen 6–8 sowie 9. Diese führen zu besonders einfachem Aufbau, niedrigem Preis und geringem Gewicht. Auch die Massnahmen nach den Ansprüchen 10–13 unterstützen dies in vorteilhafter Weise.

Durch die Gestaltung nach den Ansprüchen 14 und 15 ist soweit wie möglich verhindert, dass im Heizwasser mitgeführte Schmutzpartikel, z.B. Sand, in das Innere der Führungshülse und zum axial beweglichen Tauchanker hineingespült werden.

Von besonderem Vorteil sind die Massnahmen nach den Ansprüchen 16 und 17. Die Anschlagscheibe bewirkt zunächst eine Hubbegrenzung beim Öffnen des Ventils. Zugleich nimmt die Anschlagscheibe positiven Einfluss auf die Ventilkennlinie; denn sie erzeugt beim Schliessen des Ventils eine Servofunktion, welche die Durchsatzmenge bei hohem Wasserdruck relativ konstant hält. Dies hat einen günstigen Einfluss auf das Verhalten der Temperaturregeleinrichtung, in die das Wassersteuerventil einbezogen wird.

Vorteilhaft sind ferner die Massnahmen nach den Ansprüchen 18–21. Hierdurch ist mit einfachen Mitteln eine Axialabstützung mit Hubbegrenzung in der Öffnungsstellung des Ventils gegeben. Da sich das Abstützglied dabei nicht etwa am Magnetkern abstützt, sondern ganz allgemein an anderen Gehäuseteilen, ist ausgeschlossen, dass die beim Öffnen des Ventils wirksame Anschlagkraft des Tauchankers den Magnetkern axial aus der justierten und fixierten Stellung herausbewegt.

Auch die in den Ansprüchen 22–25 enthaltenen, vorteilhaften Ausführungsformen vereinfachen das erfindungsgemässe Steuerventil beträchtlich in Richtung kompakter, preisgünstiger Baueinheit geringen Gewichts und hoher Funktionssicherheit.

Von wesentlichem und besonderem Vorteil ist das in Anspruch 26 enthaltene Verfahren zum Herstellen des erfindungsgemässen Steuerventils, vor allem zum Einstellen des Axialabstandes des Magnetkernes vom Tauchanker. Nach dem erfindungsgemässen Verfahren gemäss Anspruch 26 kann der gewünschte, in der Schliessstellung zwischen Tauchanker und Magnetkern verbleibende axiale Restabstand sehr gleichmässig und vor allem schnell und einfach eingestellt werden, was dazu führt, dass die Leistung des Elektromagneten beachtlich besser ausgenutzt werden kann, da man diesen Axialabstand so klein wie möglich halten kann. Erreicht ist eine Fertigungsvereinfachung durch Toleranzauflockerungen. In dieser Weise hinsichtlich der Axialposition des Magnetkernes justierte Steuerventile arbeiten im wesentlichen alle gleichmässig und reproduzierbar. Es ergibt sich der Vorteil, dass im Betrieb bei normalem Erregerstrom des Elektromagneten sich ein verhältnismässig gleichmässiger Axialabstand einstellt.

Das erfindungsgemässe Verfahren nach Anspruch 26 ist durch die vorteilhaften Ausführungsformen nach den Ansprüchen 27–29 weiter in vorteilhafter Weise ausgestaltet.

Zeichnung

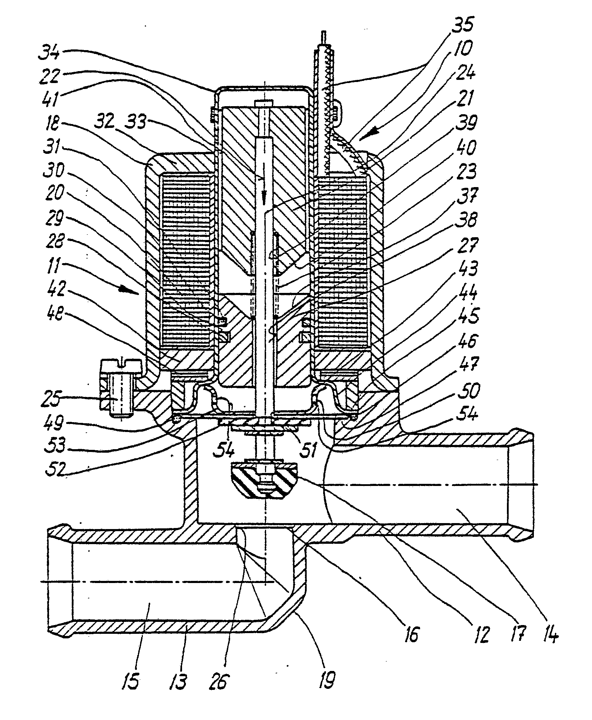

Die Erfindung ist nachfolgend anhand eines in der Zeichnung gezeigten Ausführungsbeispieles näher erläutert. Die Zeichnung zeigt einen axialen Längsschnitt eines Wassersteuerventils in der geöffneten Ventilstellung.

Beschreibung des Ausführungsbeispieles

Das gezeigte Wassersteuerventil eignet sich insbesondere für den Einbau in eine Kraftfahrzeug-Klimaanlage, insbesondere Heizungsanlage, gemäss DE-OS 2 531 015. Es wird dabei in den Heizungszulauf zu einem nichtgezeigten Heizwärmetauscher geschaltet. Sein als Elektromagnet 10 ausgebildeter Stellantrieb wird dann von einer Temperaturregeleinrichtung der Klimaanlage, insbesondere Heizungsanlage, gesteuert.

Es versteht sich jedoch, dass das Wassersteuerventil in seiner Anwendung nicht auf eine Kraftfahrzeug-Klimaanlage beschränkt ist, sondern auch für vielfältige andere Steueraufgaben eingesetzt werden kann.

Das Steuerventil weist ein allseitig geschlossenes, zweiteiliges Gehäuse 11 auf, das aus einem Gehäusetopf 18 und übrigen Gehäuseteil 19 zusammengesetzt ist. Der Gehäusetopf 18 besteht aus magnetisierbarem Material, z.B. Stahl. Er ist auf den unteren Gehäuseteil 19 aufgesetzt und über Schrauben 25 lösbar mit diesem verbunden. Der Gehäuseteil 19 trägt einen angeformten Zulaufstutzen 12 und Ablaufstutzen 13, zwischen deren Zulaufraum 14 bzw. Ablaufraum 15 eine zu steuernde Durchströmöffnung 16 mit Ventilsitz 26 gebildet ist.

Im Inneren des Gehäuses 11 befindet sich ein bewegliches Schliessglied mit einem Ventilverschlussglied 17 in Form eines Kegelstopfens aus gummielastischem Material, z.B. Gummi. Das Ventilverschlussglied 17 verschliesst in der Ventilschliessstellung die Durchströmöffnung 16 und gibt sie in der Öffnungsstellung frei.

Der Elektromagnet 10 weist eine Magnetspule 20 und einen dazu koaxialen Tauchanker 21 auf, der axial in Schliessrichtung gemäss Pfeil 22 gegen die Wirkung einer als zylindrische Schraubenfeder ausgebildeten Öffnungsfeder 23 verschiebbar ist. Fest mit dem Tauchanker 21 ist eine zu diesem und zur Durchströmöffnung 16 koaxiale Schubstange 24 verbunden, die über die Axialführung des Tauchankers 21 im wesentlichen koaxial zur Durchströmöffnung 16 geführt ist. Die Schubstange 24 trägt an dem Tauchanker 21 gegenüberliegenden Ende das darauf fest angeordnete Ventilverschlussglied 17.

In axialer Verlängerung des Tauchankers 21 befindet sich zwischen letzterem und dem Ventilverschlussglied 17 ein feststehender Magnetkern 27. Letzterer verläuft koaxial zum Tauchanker 21 und weist auf der letzterem zugewandten Seite eine etwa kegelstumpfförmige Eintiefung 37 auf, die sich in Richtung zum Ventilverschlussglied 17 hin verjüngt und durch den von der Schubstange 24 mit Bewegungsspiel durchsetzten, gegenüber letzterer im Durchmesser grösseren Axialdurchlass 38 mit dem wasserführenden Inneren des Gehäuseteiles 19 in Verbindung steht. Der Magnetkern 27 bildet am in der Zeichnung unteren Ende seiner Eintiefung 37 ein Widerlager für das in der Zeichnung untere Ende der Öffnungsfeder 23. Letztere umgibt die Schubstange 24 und greift mit ihrem anderen, in der Zeichnung oberen Ende in eine ringförmige Axialausnehmung 39 des Tauchankers 21 ein.

Der Tauchanker 21 ist an seinem zur Eintiefung 37 des Magnetkernes 27 weisenden Ende entsprechend dieser Eintiefung 37 etwa kegelstumpfförmig verjüngt. Der kegelstumpfförmige Endabsatz ist mit 40 bezeichnet. Ansonsten hat der Tauchanker 21 im wesentlichen Zylinderform, wobei er im Bereich seiner äusseren Umfangsfläche axial durchlaufende Vertiefungen 41, z.B. Rillen, Nuten od.dgl. aufweist. Die Vertiefungen 41 sind in gleichen Winkelabständen voneinander und rings um die Umfangsfläche des Tauchankers 21 gruppiert.

Der Magnetkern 27 weist im wesentlichen gleichen Aussendurchmesser auf wie der Tauchanker 21. Beide sind übereinander gruppiert. Von besonderer Bedeutung ist, dass sowohl der Tauchanker 21 als auch der Magnetkern 27 innerhalb des Gehäusetopfes 18 von einer eingesetzten, kappenförmigen und nach aussen hin abgeschlossenen Führungshülse 34 umschlossen sind, die aus schwach oder gar nicht magnetisierbarem Material, insbesondere Messing, besteht. Die Führungshülse 34 hat etwa Hutform. Sie bildet mit ihrer Innenfläche eine koaxiale Gehäuseführung für den Tauchanker 21 und enthält im Inneren das im Gehäuseteil 19, insbesondere im Zulaufraum 14, geführte Wasser und ist von diesem Wasser unter Umspülung des Tauchankers 21 durchströmt. Das Wasser kann zwischen den Vertiefungen 41 des Tauchankers 21 und der Innenfläche der Führungshülse 34 hindurch vom in der Zeichnung unteren zum oberen Ende des Tauchankers 21 und umgekehrt unter Umspülung des letzteren strömen. Die Vertiefungen 41 erleichtern das Hindurchströmen. Durch sie ist die Oberfläche des Tauchankers, die mit der Innenfläche der Führungshülse 34 in Berührung steht, möglichst klein gehalten. Die Reibung zwischen der Innenfläche und dem Tauchanker 21 ist somit sehr gering. Ferner haben die Vertiefungen 41 den Vorteil, dass eventuelle mit dem Wasser hineingelangende Schmutzpartikel durch die Vertiefungen 41 hindurch mit der dadurch erreichten Wasserströmung wieder abgeleitet werden, also nicht auf der Gleitfläche zwischen Tauchanker 21 und Führung haften bleiben und dort sonst die Reibung erhöhen. Ein Verklemmen des Tauchankers 21 ist somit ausgeschaltet.

An der Innenfläche der Führungshülse 34 ist der Magnetkern 27 in Grenzen verschiebefest gehalten, und zwar so fest, dass eine Losbrechkraft, die auf den Magnetkern 27 axial verschiebend einwirken könnte, zumindest in der Grössenordnung von etwa 15–20 kp liegt. Dabei ist der Magnetkern 27 in Axialrichtung und in bezug auf den Tauchanker 21 so justiert und eingestellt, dass die dem Tauchanker 21 zugewandte Stirnseite mit Eintiefung 37 einen fest vorgegebenen Axialabstand von der zugekehrten Stirnseite des Endabsatzes 40 des Tauchankers 21 hat. Dieser Axialabstand ist derart eingestellt, dass im geschlossenen, nichtgezeigten Zustand des Steuerventils, bei dem das Ventilverschlussglied 17 auf dem Ventilsitz 26 der Durchströmöffnung 16 sperrend aufsitzt, der verbleibende Axialabstand zwischen den kegelstumpfförmigen Flächen 40 und 37 genauso gross oder nur geringfügig grösser ist als die bei vorgegebener Lebensdauer (Betriebsstunden) eintretende Abnutzung des kegelförmigen Ventilverschlussgliedes 17. Dies bedeutet, dass erst dann der Tauchanker 21 mit seinem Endabsatz 40 in der Schliessstellung des Steuerventils an der axial gegenüberliegenden Eintiefung 37 anschlägt, wenn das Ventilverschlussglied 17 verschlissen ist und gegen ein neues ausgetauscht werden muss.

Die Haltekraft, mittels der der Magnetkern 27 an der Führungshülse 34 gegen Axialverschiebung in Grenzen verschiebefest gehalten ist, ist so eingestellt, dass die zu ihrer Überwindung notwendige, auf den Magnetkern 27 aufzubringende Losbrechkraft grösser ist, als eine beim normalen Schliessen oder Öffnen des Steuerventils darauf normalerweise wirkende Axialkraft. Dies bedeutet, dass die Hubbegrenzung des Tauchankers 21 mit Schubstange 24 und Ventilschlussglied 17 beim Öffnen durchaus durch Anschlagen an dem Magnetkern 27 geschehen könnte, ohne dass dabei die Losbrechkraft auch nur annähernd erreicht wird, die eine Axialverschiebung des justierten und in dieser Stellung fixierten Magnetkernes 27 zur Folge hätte.

Die verschiebesichere Halterung des Magnetkernes 27 in der justierten Axialstellung gegenüber der Innenfläche der Führungshülse 34 erfolgt mittels eines radial ausfedernden Drahtringes oder Sprengringes 28, der in einer Nut 29 des Magnetkernes 27 gehalten ist und radial kraftschlüssig und klemmend an der Innenfläche der Führungshülse 34 angreift. Sollte die dadurch vorgegebene, den Magnetkern 27 axial sichernde Losbrechkraft nicht ausreichend und sicher genug sein, so kann der Magnetkern 27 gegenüber der Innenfläche der Führungshülse 34 noch zusätzlich mittels eines Sicherungsmittels, z.B. eines Klebstoffes, im eingestellten Axialabstand vom Tauchanker 21 gesichert sein. Das Sicherungsmittel ist innerhalb des Ringspaltes zwischen Magnetkern 27 und Führungshülse 34 enthalten.

Um beim Einbringen des Sicherungsmittels in flüssiger Form zu verhindern, dass letzteres in den Bereich des Tauchankers 21 gelangt, ist der das Sicherungsmittel enthaltende Ringspalt in Axialrichtung zum Tauchanker 21 hin mittels eines O-Ringes 30 abgedichtet, der innerhalb einer Ringnut 31 des Magnetkernes 27 gehalten ist.

Die Führungshülse 34 ist auf ihrer äusseren Umfangsfläche und auf dem grössten Teil der axialen Erstreckung des Tauchankers 21 und des Magnetkernes 27 unmittelbar von der darauf aufgebauten Magnetspule 20 umgeben. Letztere befindet sich innerhalb des Gehäusetopfes 18, der die Magnetspule 20 umfangsseitig sowie an demjenigen Ende, das dem Ventilverschlussglied 17 abgewandt ist, topfförmig umkleidet. Im Bereich seines Bodens 32 ist der Gehäusetopf 18 von der kappenförmigen, mit ihrem in der Zeichnung oberen Ende darüber hinaus überstehenden Führungshülse 34 durchsetzt. Der dortige Ringspalt 33 sowie die Stellen, durch die Kabel 35 aus dem Gehäusetopf 18 herausgeführt sind, sind mit einem Dichtungsmittel, z.B. Silikonkautschuk, abgedichtet.

Im Inneren des Gehäusetopfes 18 ist an dem Ende der Magnetspule 20, das dem Ventilverschlussglied 17 zugewandt ist, ein Schlussring 42 aus magnetisierbarem Material angeordnet, der den magnetischen Kreis schliesst.

An ihrem zum Ventilverschlussglied 17 weisenden, offenen Rohrende weist die Führungshülse 34 eine radial überstehende Ringschulter 43 auf, an die sich in Axialrichtung ein Ringabsatz 44 anschliesst, der einen grösseren Durchmesser besitzt, als die Führungshülse 34 auf ihrer sonstigen, den Tauchanker 21 und Magnetanker 27 enthaltenden Axialerstreckung. Der Ringabsatz 44 erstreckt sich zum Zulaufraum 14 und Ablaufraum 15 hin und endet in einem radial überstehenden Endflansch 45. Mit dem Endflansch 45 sitzt die Führungshülse 34 auf einem Gehäusesitz 47 des Gehäuseteiles 19 auf, und zwar unter Zwischenschaltung eines im Gehäuseteil 19 gehaltenen O-Ringes 46. Dadurch wird das Innere des Gehäuseteiles 19 und vor allem der kappenförmigen Führungshülse 34 gegenüber dem Gehäusetopf 18 mit darin enthaltener Magnetspule 20 abgedichtet.

Im Axialbereich zwischen der Ringschulter 43 der Führungshülse 34 einerseits und dem Schlussring 42 anderseits befindet sich eine Axialdruckfeder 48 in Form einer Wellfeder, die sich axial einerseits an der Ringschulter 43 und anderseits am Schlussring 42 federelastisch abstützt. Auf der dem O-Ring 46 abgewandten Seite liegt auf dem Endflansch 45 ein im Gehäuseteil 19 zentrierter Stützring 49 mit einem Axialende auf. Auf seinem anderen axialen Ende stützt sich die Axialdruckfeder 48 ab.

Im Bereich des Gehäusesitzes 47 des Gehäuseteiles 19 ist eine ebene Siebscheibe 50 fest angeordnet. Letztere enthält eine zentrale Durchgangsöffnung 51, die mit Bewegungsspiel von der Schubstange 24 durchsetzt ist. Die Siebscheibe 50 ist z.B. zwischen dem Endflansch 45 und dem Gehäusesitz 47 klemmend gehalten.

Von besonderer Bedeutung ist eine Anschlagscheibe 52 aus elastischem Material, insbesondere Gummi, die nahe des Ventilverschlussgliedes 17 in axialem Abstand von diesem auf der Schubstange 24 befestigt ist. Die Anschlagscheibe 52 dient der Hubbegrenzung der Schubstange 24 mit Tauchanker 21 in der dargestellten Öffnungsstellung. In letzterer schlägt sie axial zumindest an der Siebscheibe 50 und, wie später noch erläutert werden wird, auch an Gehäuseteilen an, wie dargestellt ist. Von besonderem Vorteil ist zugleich, dass die Anschlagscheibe 52 als Hilfssteuerscheibe ausgebildet ist, die beim Schliessen des Steuerventils eine Servowirkung erzeugt, welche die Durchsatzmenge bei hohem Wasserdruck relativ konstant hält. Dies hat einen günstigen Einfluss auf die Regelung, die mittels des Steuerventils erfolgen soll.

Generell ist im Axialbereich zwischen der Siebscheibe 50 und dem letzterer zugewandten Ende des Magnetkernes 27 ein Abstützglied angeordnet, das hier als etwa napfartiges Distanzstück 53 ausgebildet ist. Letzteres stützt sich mit einem Ende in Radialabstand vom Magnetkern 27 am Gehäuse 11 axial ab und bildet mit ihrem anderen Ende eine Abstützfläche für die Siebscheibe 50. Erreicht ist somit, dass die axialen Abstützkräfte bei der Hubbegrenzung des Steuerventils in seiner Öffnungsstellung nicht auf den Magnet 27 wirken und somit dessen justierte Axialstellung nicht beeinflussen können. Das napfartige Distanzstück 53 ist innerhalb des Innenraumes angeordnet, der vom Ringabsatz 44 der Führungshülse 34 umgrenzt ist. Mit einem Endrand stützt sich das Abstützglied 53 axial an der Ringschulter 43 der Führungshülse 34 ab, während es mit seinem Boden die Abstützfläche für die Siebscheibe 50 bildet. Im Boden besitzt das Abstützglied 53 eine zentrale Durchlassöffnung, die mit Bewegungsspiel von der Schubstange 24 durchsetzt ist. Wie angedeutet ist, weist das Abstützglied 53 im Bereich seines Bodens und/oder der Seiten jeweils Öffnungen 54 für den Wasserdurchtritt und Wasserausgleich auf.

Das als Kegelstopfen gestaltete Ventilverschlussglied 17 besitzt einen Kegelwinkel, der in Abhängigkeit vom eingestellten Axialabstand des Magnetkernes 27 vom Tauchanker 21 so gewählt ist, dass bei der Schliessbewegung des Steuerventils das Ventilverschlussglied 17 auf dem zugeordneten Ventilsitz 26 schliessend aufsitzt, bevor der Tauchanker 21 mit seinem Endabsatz 40 axial an der Eintiefung 37 des Magnetkernes 27 anschlägt. Der sich dann ergebende Axialabstand zwischen Endabsatz 40 und Eintiefung 37 ist etwa so gross oder geringfügig grösser als die sich während der gesamten Betriebsdauer einstellende Abnutzung des Ventilverschlussgliedes 17. Dieser Axialabstand beträgt dabei ≥ 0,3–0,7 mm.

Beim Herstellen des beschriebenen Wassersteuerventils, insbesondere beim Einstellen des besagten Axialabstandes des Magnetkernes 27 vom Tauchanker 21, wird folgendermassen vorgegangen. Man schiebt zunächst den Magnetkern 27 vom offenen Rohrende der Führungshülse 34 her in diese axial tiefer ein, als es der endgültigen Axialstellung des Magnetkernes 27 entspricht. Sodann nach Montage aller übrigen Bestandteile des Steuerventils lässt man auf den Tauchanker 21 in Pfeilrichtung 22 eine vorgegebene axiale Kraft in Schliessrichtung des Steuerventils einwirken. Dabei lässt man das Ventilverschlussglied 17 mit vorgegebener Kraft auf dem Ventilsitz 26 der Durchströmöffnung 16 aufsitzen und unter elastischer Zusammenpressung die axiale, auf den Tauchanker 21 aufgebrachte Kraft aufnehmen. Dabei lässt man den Tauchanker 21 mit seinem Endabsatz 40 an der Eintiefung 37 des Magnetkernes 27 anschlagen, so dass der Tauchanker 21 den Magnetkern 27 unter der Wirkung der axialen Kraft in Pfeilrichtung 22 axial in die gewünschte Justierstellung verschiebt.

Die vorgegebene, axiale Kraft beim Justieren kann man dadurch erzeugen, dass man die Magnetspule 20 z.B. etwa impulsartig mit einem über dem normalen Betriebsstrom liegenden, überhöhten Strom erregt und den dadurch mit hoher Aufschlagenergie in Schliessrichtung gemäss Pfeil 22 beaufschlagten Tauchanker 21 etwa hammerartig gegen den Magnetkern 27 schlagen lässt. Dabei verschiebt der Tauchanker 21 infolge seiner hohen Aufschlagenergie den Magnetkern 27, bis das Ventilverschlussglied 17 auf dem Ventilsitz 26 aufsitzt und aufgrund seiner Elastizität bei einer bestimmten Zusammenpressung den Axialstoss voll aufnimmt. So stellt sich dann bei normalem Betriebsstrom ein verhältnismässig gleichmässiger Abstand zwischen Tauchanker 21 und Magnetkern 27 ein, der relativ klein ist und dadurch in vorteilhaftem Masse die Ventilschliesskraft und somit den maximal zu steuernden Wasserdruck bestimmt.

Statt dessen kann man die vorgegebene axiale Kraft auch als äussere Kraft z.B. durch eine Öffnung im in der Zeichnung oberen Boden der Führungshülse 34 auf den Tauchanker 21 einwirken lassen. Die äussere Kraft drückt somit den Tauchanker 21 und Magnetkern 27 gemeinsam in Schliessrichtung gemäss Pfeil 22 unter Verschiebung des Magnetkernes 27, bis das Ventilverschlussglied 17 mit bestimmter Pressung auf dem Ventilsitz 26 aufsitzt und die wirkende Verschiebekraft aufnimmt. Danach stellt sich ebenfalls bei normaler Schliesskraft des Tauchankers 21 der gewünschte, axiale Restabstand zwischen Tauchanker 21 und Magnetkern 27 ein. Hiernach wird die Öffnung der Führungshülse 34 dicht verschlossen, z.B. mittels Verschlussschraube und Dichtung, Zulöten od.dgl.

Sollte in dieser justierten Axialstellung des Magnetkernes 27 die wirkende Axialsicherung durch den Sprengring 28 nicht ausreichend sicher sein, so kann man vor, bei oder auch nach dem Einsetzen des Magnetkernes 27 in die Führungshülse 34 zwischen beiden das flüssige Sicherungsmittel einbringen, das nach Montieren des Magnetkernes 27 langsam aushärtet und die Justierstellung des Magnetkernes 27 zusätzlich sichert. Es versteht sich, dass man bei den beschriebenen Schritten die axiale Kraft so gross wählt wie die zur Axialverschiebung des Magnetkernes 27 notwendige Losbrechkraft. Diese kann in der Grössenordnung von etwa 15–20 kp liegen.

Die Wirkungsweise des beschriebenen Steuerventils ist geläufig und braucht nicht im einzelnen erläutert zu werden.

**Patentansprüche**

1. Wassersteuerventil für eine Kraftfahrzeug-Klimaanlage, insbesondere Heizungsanlage, das in den Wasserzulauf zu einem Wärmetauscher schaltbar und dessen Stellantrieb von einer Temperaturregeleinrichtung steuerbar ist, wobei das Steuerventil innerhalb eines abgeschlossenen, mit Zulauf- (12) und Ablaufstutzen (13) versehenen Gehäuses ein bewegliches Schliessglied aufweist, an dem an einem Ende ein die Durchströmöffnung (16) zwischen Zulauf- (14) und Ablaufraum (15) beherrschendes Ventilverschlussglied (17) befestigt ist, und wobei der Stellantrieb als Elektromagnet (10) ausgebildet ist, der einen innerhalb der Magnetspule (20) und gegen die Wirkung einer Öffnungsfeder (23) verschiebbaren Tauchanker (21) aufweist, an dem eine dazu und zur Durchströmöffnung (16) koaxiale Schubstange (24) befestigt ist, die am dem Tauchanker (21) gegenüberliegenden Ende das Ventilverschlussglied (17) trägt, wobei in axialer Verlängerung des Tauchankers (21) zwischen diesem und dem Ventilverschlussglied (17) ein zum Tauchanker (21) koaxialer Magnetkern (27) angeordnet ist, der von der Schubstange (24) mit Radialspiel durchsetzt ist und ein Widerlager für das eine Ende der Öffnungsfeder (23) bildet, deren anderes Ende am Tauchanker (21) abgestützt ist, dadurch gekennzeichnet, dass der Tauchanker (21) und der Magnetkern (27) im Gehäuse (11, 18) von einer eingesetzten, kappenförmigen und nach aussen hin abgeschlossenen Führungshülse (34) aus schwach oder nicht magnetisierbarem Material umschlossen sind, die mit ihrer Innenfläche eine koaxiale Gehäuseführung für den Tauchanker (21) bildet, die das im Zulaufraum (14) geführte Wasser enthält und von diesem unter Umspülung des Tauchankers (21) durchströmt ist, dass der Tauchanker (21) auf seiner äusseren Umfangsfläche, mit der er längs der Innenfläche der Führungshülse (34) geführt ist, axial durchlaufende Vertiefungen (41) in Form von Rillen, Nuten od.dgl. aufweist, in denen Wasser von einen zum anderen Ende des Tauchankers (21) führbar ist, und dass der Magnetkern (27) gegenüber der Führungshülse (34) durch Kraftschluss zwischen Magnetkern (27) und Führungshülse (34) gegen Axialverschiebung gesichert ist.

2. Wassersteuerventil nach Anspruch 1, dadurch gekennzeichnet, dass die Haltekraft, mittels der der Magnetkern (27) an der Führungshülse (34) gegen Axialverschiebung verschiebefest gehalten ist in der Grössenordnung von 15–20 kp liegt.

3. Wassersteuerventil nach Anspruch 1 oder 2, dadurch gekennzeichnet, dass der Magnetkern (27) gegenüber der Innenfläche der Führungshülse (34) mittels eines am Magnetkern (27) gehaltenen, radial ausfedernden Sprengringes (28) kraftschlüssig verschiebesicher gehalten ist.

4. Wassersteuerventil nach Anspruch 2 oder 3, dadurch gekennzeichnet, dass der Magnetkern (27) gegenüber der Innenfläche der Führungshülse (34) mittels eines Sicherungsmittels, z.B. eines Klebstoffes, das vorzugsweise innerhalb des Ringspaltes zwischen dem Magnetkern (27) und der Führungshülse (34) enthalten ist, mit eingestelltem Axialabstand vom Tauchanker (21) gesichert ist.

5. Wassersteuerventil nach Anspruch 4, dadurch gekennzeichnet, dass der das Sicherungsmittel enthaltende Ringspalt in Axialrichtung zum Tauchanker (21) hin mittels eines Dichtungsringes (30) abgedichtet ist, der innerhalb einer Ringnut (31) des Magnetkernes (27) gehalten ist.

6. Wassersteuerventil nach einem der Ansprüche 1–5, dadurch gekennzeichnet, dass die Führungshülse (34) auf ihrer äusseren Umfangsfläche und auf dem grössten Teil der axialen Erstreckung des Tauchankers (21) und des Magnetkernes (27) unmittelbar von der darauf aufgebauten Magnetspule (20) umgeben ist.

7. Wassersteuerventil nach einem der Ansprüche 1–6, dadurch gekennzeichnet, dass das Gehäuse (11) im Bereich der Magnetspule (20) einen Gehäusetopf (18) aus magnetisierbarem Material, insbesondere Stahl, aufweist, der die Magnetspule (20) umfangsseitig sowie an einem Ende, das dem Ventilverschlussglied (17) abgewandt ist, topfförmig umkleidet.

8. Wassersteuerventil nach Anspruch 7, dadurch gekennzeichnet, dass der Gehäusetopf (18) auf dem übrigen, den Zu- und Ablaufstutzen (12 und 13) mit darin enthaltenem Zu- und Ablaufraum (14 bzw. 15) enthaltenden Gehäuseteil (19) aufgesetzt und mit diesem lösbar verbunden ist.

9. Wassersteuerventil nach Anspruch 7 oder 8, dadurch gekennzeichnet, dass der Gehäusetopf (18) im Bereich seines Bodens (32) von der kappenförmigen, mit ihrem Ende darüber hinaus überstehenden Führungshülse (34) durchsetzt ist und dass die Ringspalte (33) im Durchsetzungsbereich mit einem Dichtungsmittel, z.B. Silikonkautschuk, abgedichtet sind.

10. Wassersteuerventil nach einem der Ansprüche 7–9, dadurch gekennzeichnet, dass im Inneren des Gehäusetopfes (18) an dem Ende der Magnetspule (20), das dem Ventilverschlussglied (17) zugewandt ist, ein den magnetischen Kreis schliessender Schlussring (42) aus magnetisierbarem Material angeordnet ist.

11. Wassersteuerventil nach Anspruch 10, dadurch gekennzeichnet, dass die Führungshülse (34) an ihrem zum Ventilverschlussglied (17) weisenden, offenen Rohrende eine radial überstehende Ringschulter (43) aufweist und dass im Axialbereich zwischen der Ringschulter (43) und dem Schlussring (42) eine Axialdruckfeder (48), z.B. eine Wellfeder, angeordnet ist, die sich axial einerseits am Schlussring (42) und anderseits an der Ringschulter (43) abstützt.

12. Wassersteuerventil nach Anspruch 11, dadurch gekennzeichnet, dass die Führungshülse (34) einen sich axial an die Ringschulter (43) anschliessenden Ringabsatz (44) grösseren Durchmessers als auf ihrer sonstigen, den Tauchanker (21) und Magnetkern (27) enthaltenden Axialerstreckung aufweist, der sich in Axialrichtung zum den Zulauf- und Ablaufraum (14 und 15) enthaltenden Gehäuseteil (19) erstreckt und in einem radial überstehenden Endflansch (45) endet, der über einen im Gehäuseteil (19) gehaltenen Dichtungsring (46) auf einem Gehäusesitz (47) unter Abdichtung des Inneren des Gehäuseteiles (19) und der Führungshülse (34) gegenüber dem die Magnetspule (20) enthaltenden Gehäusetopf (18) aufsitzt.

13. Wassersteuerventil nach Anspruch 12, dadurch gekennzeichnet, dass auf der dem Dichtungsring (46) abgewandten Seite des Endflansches (45) ein im Gehäuseteil (19) zentrierter Stützring (49) aufliegt, auf dessen anderem Ende sich die Axialdruckfeder (48) abstützt.

14. Wassersteuerventil nach einem der Ansprüche 1–13, gekennzeichnet durch eine ebene Siebscheibe (50), die fest im den Zu- und Ablaufraum (14 und 15) mit Durchströmöffnung (16) enthaltenden Gehäuseteil (19) angeordnet ist und eine zentrale Durchgangsöffnung (51) aufweist, die mit Bewegungsspiel von der Schubstange (24) durchsetzt ist.

15. Wassersteuerventil nach Anspruch 14, dadurch gekennzeichnet, dass die Siebscheibe (50) zwischen dem Endflansch (45) der Führungshülse (34) und dem Gehäusesitz (47) klemmend gehalten ist.

16. Wassersteuerventil nach einem der Ansprüche 14 oder 15, dadurch gekennzeichnet, dass auf der Schubstange (24) nahe des Ventilverschlussgliedes (17) in axialem Abstand von diesem eine Anschlagscheibe (52), vorzugsweise aus elastischem Material, z.B. Gummi, befestigt ist, die in der Öffnungsstellung der Schubstange (24) mit Ventilverschlussglied (17) axial am Gehäuse (11, 18, 19) und/oder an der Siebscheibe (50) anschlägt und als Hubbegrenzung in der Öffnungsstellung ausgebildet ist.

17. Wassersteuerventil nach Anspruch 16, dadurch gekennzeichnet, dass die Anschlagscheibe (52) als beim Schliessen des Steuerventils eine Servowirkung, die die Durchsatzmenge bei hohem Wasserdruck relativ konstant hält, erzeugende Hilfssteuerscheibe ausgebildet ist.

18. Wassersteuerventil nach Anspruch 16 oder 17, gekennzeichnet durch ein im Axialbereich zwischen der Siebscheibe (50) und dem letzterer zugewandten Ende des Magnetkernes (27) angeordnetes Abstützglied (53), das sich mit einem Ende in Radialabstand vom Magnetkern (27) am Gehäuse (11, 19, 34, 43) abstützt und mit seinem anderen Ende eine Abstützfläche für die Siebscheibe (50) bildet.

19. Wassersteuerventil nach Anspruch 18, dadurch gekennzeichnet, dass das Abstützglied (53) als etwa napfartiges Distanzstück ausgebildet ist, das im vom Ringabsatz (44) der Führungshülse (34) umgrenzten Innenraum angeordnet ist und sich mit einem Endrand axial an der Ringschulter (43) der Führungshülse (34) abstützt, während es mit seinem Boden die Abstützfläche für die Siebscheibe (50) bildet.

20. Wassersteuerventil nach Anspruch 19, dadurch gekennzeichnet, dass das etwa napfartige Distanzstück (53) im Boden eine zentrale Durchlassöffnung aufweist, die mit Bewegungsspiel von der Schubstange (24) durchsetzt ist.

21. Wassersteuerventil nach Anspruch 19 oder 20, dadurch gekennzeichnet, dass das Distanzstück (53) im Bereich seines Bodens und/oder der Seiten Öffnungen (54) für den Wasserdurchtritt und -ausgleich aufweist.

22. Wassersteuerventil nach einem der Ansprüch 1–21, dadurch gekennzeichnet, dass das Ventilverschlussglied (17) als Kegelstopfen aus gummielastischem Material, z.B. Gummi, ausgebildet ist.

23. Wassersteuerventil nach einem der Ansprüche 1–22, dadurch gekennzeichnet, dass die Öffnungsfeder (23) als zylindrische Schraubenfeder ausgebildet ist, die die Schubstange (24) umgibt und mit einem Ende in eine ringförmige Axialausnehmung (39) des Tauchankers (21) eingreift.

24. Wassersteuerventil nach einem der Ansprüche 1–23, dadurch gekennzeichnet, dass der Magnetkern (27) auf der dem Tauchanker (21) zugewandten Seite eine etwa kegelstumpfförmige, sich in Richtung zum Ventilverschlussglied (17) hin verjüngende Eintiefung (37) aufweist, die über den von der Schubstange (24) durchsetzten, dieser gegenüber im Durchmesser grösseren Axialdurchlass (38) mit dem Zu- und Ablaufraum (14 und 15) verbunden ist.

25. Wassersteuerventil nach Anspruch 24, dadurch gekennzeichnet, dass der Tauchanker (21) an seinem zur Eintiefung (37) weisenden Ende etwa kegelstumpfförmig und entsprechend der Eintiefung (37) verjüngt ist.

26. Verfahren zum Herstellen des Wassersteuerventils nach Anspruch 1, insbesondere zum Einstellen des Axialabstandes des Magnetkernes vom Tauchanker, dadurch gekennzeichnet, dass man den Magnetkern (27) vom offenen Rohrende der Führungshülse (34) her in diese axial zunächst tiefer einschiebt und näher an den Tauchanker (21) heranschiebt, als es der endgültigen Axialstellung des Magnetkernes (27) entspricht, dass man sodann nach Montage aller übrigen Bestandteile des Steuerventils auf den Tauchanker (21) eine vorgegebene axiale Kraft in Schliessrichtung (Pfeil 22) des Steuerventils einwirken lässt, das Ventilverschlussglied (17) mit vorgegebener Kraft auf dem Ventilsitz (26) der Durchströmöffnung (16) aufsitzen und unter elastischer Zusammenpressung die axiale Kraft aufnehmen lässt und dass man dabei den Tauchanker (21) mit seinem dem Magnetkern (27) zugekehrten Ende (40) an letzterem (27) anschlagen und den Magnetkern (27) unter der Wirkung der axialen Kraft axial in seine Justierstellung verschieben lässt.

27. Verfahren nach Anspruch 26, dadurch gekennzeichnet, dass man die vorgegebene axiale Kraft dadurch erzeugt, dass man die Magnetspule (20), vorzugsweise impulsartig, mit einem über dem normalen Betriebsstrom liegenden, überhöhten Strom erregt und den dadurch mit hoher Aufschlagenergie in Schliessrichtung (Pfeil 22) beaufschlagten Tauchanker (21) gegen den Magnetkern (27) schlagen lässt.

28. Verfahren nach Anspruch 26, dadurch gekennzeichnet, dass man die vorgegebene axiale Kraft als äussere Kraft durch eine Öffnung im Boden der Führungshülse (34) auf den Tauchanker (21) einwirken lässt und nach erfolgtem Justieren des Magnetkernes (27) die Öffnung dicht verschliesst.

29. Verfahren nach einem der Ansprüche 26–28, dadurch gekennzeichnet, dass man vor, bei oder nach dem Einsetzen des Magnetkernes (27) in die Führungshülse (34) zwischen beiden ein nach dem Justieren aushärtendes Sicherungsmittel einbringt.

**Claims**

1. A water control valve for a motor vehicle air conditioning system, especially a heating system, which can be operated in the water supply to a heat exchanger and the adjustment drive therefor can be controlled by a temperature regulating device, wherein the control valve has a movable closure member within a closed housing provided with supply (12) and discharge (13) connections, a valve closure member (17) controlling the through flow opening (16) between the inlet (14) and the discharge (15) chamber being fixed to the closure member at one end and wherein the adjustment drive is formed as an electromagnet (10) which has a plunger-type armature (21) displaceable within the magnet coil (20) and against the action of an opening spring (23) a pushrod (24) being fixed to the armature coaxial thereto and to the through flow opening (16) the pushrod carrying the valve closure member (17) at the end opposite to the armature (21), wherein a magnet core (27) coaxial with the armature (21) is arranged in an axial extension of the armature (21) between the latter and the valve closure member (17), the pushrod (24) passing with clearance through the magnet core which forms an abutment for one end of the opening spring (23) the other end of which is supported by the armature (21), characterised in that, the armature (21) and the magnet core (27) are enclosed by a hood-like guide sleeve (34), closed to the outside, made of weakly or non-magnetisable material, the inner surface of the guide sleeve forming a coaxial housing guide for the armature (21) and containing water conveyed to the supply chamber (14), the water flowing through the guide sleeve whilst flowing around the armature (21), that, on its outer peripheral surface by means of which it is guided along the inner surface of the guide sleeve (34), the armature (21) has recesses (41) in the form of channels, grooves or the like passing axial through it and in which water can be conveyed from one end of the armature (21) to the other and that the magnet core (27) ist secured against axial displacement by non-positive means between the magnet core (27) and the guide sleeve (34).

2. A water control valve according to claim 1, characterised in that, the holding force by means of which the magnet core (27) is held against axial displacement in the guide sleeve (34) is of the order of 15–20 kp.

3. A water control valve according to claim 1 or 2, characterised in that, the magnet core (27) is secured non-positively against displacement with respect to the inner surface of the guide sleeve (34) by means of a radially outwardly resilient snap-ring (28) held in the magnet core (27).

4. A water control valve according to claim 2 or 3, characterised in that, the magnet core (27) is secured against the inner surface of the guide sleeve (34) at a set axial distance from the armature (21) by means of a securing agent, for example an adhesive, which is preferably contained in the annular gap between the magnet core (27) an the guide sleeve (34).

5. A water control valve according to claim 4, characterised in that, the annular gap containing the securing agent is sealed axially towards the armature (21) by means of a sealing ring (30) which is held in an annular groove (31) in the magnet core (27).

6. A water control valve according to one of claims 1 to 5, characterised in that, the guide sleeve (34) is surrounded directly by the magnet coil (20) mounted thereon, on its outer peripheral surface and over the greater part of the axial extension of the armature (21) and of the magnet core (27).

7. A water control valve according to one of claims 1 to 6, characterised in that, in the region of the magnet coil (20), the housing (11) has a housing pot (18) of magnetisable material, especially steel, which covers the magnet coil (20) peripherally and is pot-like at one end which is remote from the valve closure member (17).

8. A water control valve according to claim 7, characterised in that, the housing pot (18) is mounted on the remaining housing portion (19) including the supply and discharge connections (12 and 13) and the supply and discharge chambers (14 and 15) included therein, and is releasably connected thereto.

9. A water control valve according to claim 7 or 8, characterised in that, in the region of its base (32), the housing pot (18) is penetrated by the cap-like guide sleeve (34) with its end projecting out of the housing pot and that the annular gaps (33) are sealed in the region of penetration by a sealing agent, for example silicone rubber.

10. A water control valve according to one of claims 7 to 9, characterised in that, an end ring (42) of magnetisable material closing the magnetic circuit is arranged in the interior of the housing pot (18) at the end of the magnet coil (20) facing towards the valve closure member (17).

11. A water control valve according to claim 10, characterised in that, at its open tubular end directed towards the valve closure member (17), the guide sleeve (34) hat a radially projecting annular shoulder (43) and that, in the axial region between the annular shoulder (43) and the end ring (42), an axial compression spring (48), for example a corrugated spring, is provided which abuts axially on the one hand against the end ring (42) and on the other hand against the annular shoulder (43).

12. A water control valve according to claim 11, characterised in that, the guide sleeve (34) has an annular extension (44) adjoining the annular shoulder (43), of larger diameter than its remaining axial length including the armature (21) and the magnet core (27) and which extends in an axial direction towards the housing portion (19) containing the supply and discharge chambers (14 and 15) and terminates in a radially projecting end flange (45) which is seated on a housing seating (47) through a sealing ring (46) held in the housing portion (19) whilst sealing the interior of the housing portion (19) and the guide sleeve (34) with respect to the housing pot (18) including the magnet coil (20).

13. A water control valve according to claim 12, characterised in that, a support ring centred in the housing portion (19) is mounted on the side of the end flange (45) remote from the sealing ring (46) and the axial compression spring (48) abuts its other end.

14. A water control valve according to one of claims 1 to 13, characterised by a flat filter disc (50) which is fixedly arranged in the housing portion (19) including the supply and discharge chambers (14 and 15) with the through flow opening (16) and has a central passage (51) through which the pushrod (24) passes with movement clearance.

15. A water control valve according to claim 14, characterised in that, the filter disc (50) is clampingly held between the end flange (45) of the guide sleeve (34) and the housing seating (47).

16. A water control valve according to one of claims 14 or 15, characterised in that, an abutment disc (52), preferably of elastic material such as rubber, is fixed to the pushrod (24) in the vicinity of the valve closure member (17) and at an axial distance from the latter, which abutment disc axially abuts the housing (11, 18, 19) and/or the filter disc (50) in the open position of the pushrod (24) provided with the valve closure member (17) and is formed as a stroke limitation in the open position.

17. A water control valve according to claim 16, characterised in that, the abutment disc (52) is formed as an auxiliary control disc producing a servo effect during closure of the control valve which holds the rate of flow relatively constant at high water pressure.

18. A water control valve according to claim 16 or 17, characterised by a support member (53) arranged in the axial region between the filter disc (50) and the end of the magnet core (27) facing the latter and one end of which abuts the housing (11, 19, 34, 43) at a radial distance from the magnet core (27) and the other end of which forms a supporting surface for the filter disc (50).

19. A water control valve according to claim 18, characterised in that, the supporting member (53) is formed as a substantially bowl-like distance piece which is arranged in the inner chamber bounded by the annular extension (44) of the guide sleeve (34) and is axially supported by one end edge on the annular shoulder (43) of the guide sleeve (34) whilst its base forms the supporting surface for the filter disc (50).

20. A water control valve according to claim 19, characterised in that, the substantially bowl-like distance piece (53) has a central passage in the base through which the pushrod (24) passes with movement clearance.

21. A water control valve according to claim 19 or 20, characterised in that, in the region of its base and/or the sides, the distance piece (53) has openings (54) for the passage and equalization of the water.

22. A water control valve according to one of claims 1 to 21, characterised in that, the valve closure member (17) is formed as a tapered plug made of rubber elastic material, for example rubber.

23. A water control valve according to one of claims 1 to 22, characterised in that, the opening spring (23) is formed as a cylindrical helical spring which surrounds the pushrod (24) and at one end engages in an annular axial recess (39) in the armature (21).

24. A water control valve according to one of claims 1 to 23, characterised in that, on the side facing the armature (21), the magnet core (27) has a substantially frustoconical recess (37) narrowing towards the valve closure member (17) which recess is connected to the supply and discharge chambers (14 and 15) by the axial passage (38) through which the pushrod (24) passes and which is of greater diameter than the pushrod.

25. A water control valve according to claim 24, characterised in that, at its end directed towards the recess (37), the armature (21) is substantially frustoconical and is narrowed in accordance with the recess (37).

26. A method of producing the water control valve according to claim 1, especially for adjusting the axial distance of the magnet core from the armature, characterised in that, first of all, the magnet core (27) is pushed from the open tubular end of the guide sleeve (34) into the sleeve axially to a greater extent and nearer to the armature (21) than corresponds to the final axial position of the magnet core (27), then, after mounting all the other components of the control valve a predetermined axial force in the closing direction (arrow 22) of the control valve is caused to act on the armature (21), the valve closure member (17) is caused to seat under the predetermined force on the valve seat (26) of the through flow opening (16) and is caused to absorb the axial force under elastic compression and that, in so doing, the end (40) of the armature (21) is caused to abut the magnet core (27) and the magnet core (27) is moved axially into its adjusted position under the action of the axial force.

27. A method according to claim 26, characterised in that, the predetermined axial force is generated by energising the magnet coil (20), preferably in pulses, with a current which is above the normal operating current and the armature (21) influenced in the closing direction (arrow 22) by the higher impact energy is caused to strike the magnet core (27).

28. A method according to claim 26, characterised in that, the predetermined axial force is caused to act on the armature (21) as an external force through an opening in the base of the guide sleeve (34) and after subsequent adjustment of the magnet core (27) the opening is sealingly closed.

29. A method according to one of claims 26 to 28, characterised in that, before, during or after the insertion of the magnet core (27) into the guide sleeve (34), a securing agent is introduced between the two parts and is hardened after adjustment.

**Revendications**

1. Soupape de commande d'eau pour une installation de climatisation de véhicule automobile, notamment installation de chauffage, pouvant être actionnée dans l'arrivée d'eau à un échangeur de chaleur et sa commande de manoeuvre pouvant être commandée par un dispositif de réglage de température, la soupape de commande comportant à l'intérieur d'un carter fermé muni d'une tubulure d'arrivée (12) et d'une tubulure de sortie (13) un organe de fermeture mobile sur lequel est fixé à une extrémité un obturateur de soupape (17) commandant l'orifice de passage (16) entre la chambre d'arrivée (14) et la chambre de sortie (15), la commande de manoeuvre étant agencée en tant qu'électroaimant (10) comportant une armature plongeante (21) déplaçable à l'intérieur de la bobine électromagnétique (20) et contre l'action d'un ressort d'ouverture (23), sur laquelle est fixée une tige de poussée (24) coaxiale à l'armature et à l'orifice de passage (16), tige portant l'obturateur de soupape (17) à l'extrémité opposée à l'armature plongeante (21), un noyau magnétique (27) coaxial à l'armature plongeante (21) étant disposé dans le prolongement axial de l'armature plongeante (21) entre celle-ci et l'obturateur de soupape (17), noyau traversé par la tige de poussée (24) avec un jeu radial et formant un appui pour l'une des extrémités du ressort d'ouverture (23), dont l'autre extrémité s'appuie sur l'armature plongeante (21), caractérisée en ce que l'armature plongeante (21) et la noyau magnétique (27) sont entourés dans le carter (11, 18) par une douille de guidage encastrée (34) en matière faiblement magnétique ou non magnétique en forme de capuchon et fermée vers l'extérieur, constituant par sa surface intérieure un guidage coaxial du carter pour l'armature plongeante (21), contenant l'eau conduite dans la chambre d'arrivée (14) et parcourue par celle-ci avec balayage de l'armature plongeante (21), en ce que l'armature plongeante (21) comporte sur sa surface latérale extérieure, par laquelle elle est guidée le long de la surface intérieure, de la douille de guidage (34), des renfoncements (41) à extension axiale sous forme de cannelures, de rainures ou similaires, dans lesquels l'eau peut être conduite d'une extrémité à l'autre de l'armature plongeante (21), et en ce que le noyau magnétique (27) est garanti contre un déplacement axial vis-à-vis de la douille de guidage (34) par liaison de force entre noyau magnétique (27) et douille de guidage (34).

2. Soupape de commande d'eau selon la revendication 1, caractérisée en ce que la force de maintien, au moyen de laquelle le noyau magnétique (27) est maintenu sur la douille de guidage (34) contre un déplacement axial est d'un ordre de grandeur de 15 à 20 kg.

3. Soupape de commande d'eau selon l'une quelconque des revendications 1 ou 2, caractérisée en ce que le noyau magnétique (27) est maintenu en liaison de force contre un déplacement vis-à-vis de la surface intérieure de la douille de guidage (34) au moyen d'une bague d'arrêt (28) maintenue sur le noyau magnétique (27) et expansible élastiquement en direction radiale.

4. Soupape de commande d'eau selon l'une quelconque des revendications 2 ou 3, caractérisée en ce que le noyau magnétique (27) est fixé vis-à-vis de la surface intérieure de la douille de guidage (34) au moyen d'un agent de fixation, par exemple d'un adhésif, de préférence contenu à l'intérieur de l'intervalle annulaire entre le noyau magnétique (27) et la douille de guidage (34), à distance axiale réglée de l'armature plongeante (21).

5. Soupape de commande d'eau selon la revendication 4, caractérisée en ce que l'intervalle annulaire contenant l'agent de fixation est rendu étanche en direction axiale vis-à-vis de l'armature plongeante (21) au moyen d'une bague d'étanchéité (30) maintenue à l'intérieur d'une rainure annulaire (31) du noyau magnétique (27).

6. Soupape de commande d'eau selon l'une quelconque des revendications 1 à 5, caractérisée en ce que la douille de guidage (34) est, sur sa surface latérale extérieure et sur la plus grande partie de l'étendue axiale de l'armature plongeante (21) et du noyau magnétique (27, directement entourée par la bobine électromagnétique (20) constituée sur elle.

7. Soupape de commande d'eau selon l'une quelconque des revendications 1 à 6, caractérisée en ce que le carter (11) comporte dans le domaine de la bobine électromagnétique (20) un pot de carter (18) en matière magnétisable, notamment en acier, enveloppant en forme de pot la bobine électromagnétique (20) sur son pourtour ainsi qu'à une extrémité opposée à l'obturateur de soupape (17).

8. Soupape de commande d'eau selon la revendication 7, caractérisée en ce que le pot de carter (18) est posé sur la partie de carter restante (19) comportant les tubulures d'arrivée et de sortie (12 et 13) avec les chambres d'arrivée et de sortie (14, 15) qu'elles contiennent, le pot étant assemblé de façon amovible avec cette partie.

9. Soupape de commande d'eau selon la revendication 7 ou 8, caractérisée en ce que le pot de carter (18) est traversé dans le domaine de son fond (32) par la douille de guidage (34) en forme de capuchon sortant en outre par son extrémité et en ce que l'intervalle annulaire (33) dans le domaine de traversée est rendu étanche par un agent d'étanchéité, par exemple du caoutchouc au silicone.

10. Soupape de commande d'eau selon l'une quelconque des revendications 7 à 9, caractérisée en ce qu'une bague de fermeture (42) en matière magnétisable fermant le circuit magnétique est disposée à l'intérieur du pot de carter (18) sur l'extrémité de la bobine électromagnétique (20) dirigée vers l'obturateur de soupape (17).

11. Soupape de commande d'eau selon la revendication 10, caractérisée en ce que la douille de guidage (34) comporte à son extrémité tubulaire ouverte dirigée vers l'obturateur de soupape (17) un épaulement annulaire (43) en saillie radiale et en ce que dans le domaine axial entre l'épaulement annulaire (43) et la bague de fermeture (42) est disposé un ressort de compression axial (48), par exemple un ressort ondulé, qui s'appuie en direction axiale d'une part sur la bague de fermeture (42) et d'autre part sur l'épaulement annulaire (43).

12. Soupape de commande d'eau selon la revendication 11, caractérisée en ce que la douille de guidage (34) comporte une partie annulaire (44), se raccordant à l'épaulement annulaire (43), de plus grand diamètre que le reste de son extension axiale contenant l'armature plongeante (21) et le noyau magnétique (27), cette partie s'étendant en direction axiale vers la partie de carter (19) qui contient les chambres d'arrivée et de sortie (14 et 15) et se terminant par une collerette d'extrémité (45) en saillie radiale, collerette reposant sur un siège (47) du carter par l'intermédiaire d'une bague d'étanchéité (46) maintenue dans la partie (19) du carter en rendant étanche l'intérieur de la partie (19) du carter et de la douille de guidage (34) vis-à-vis du pot de carter (19) contenant la bobine électromagnétique (20).

13. Soupape de commande d'eau selon la revendication 12, caractérisée en ce qu'une bague d'appui (49) centrée dans la partie (19) du carter repose sur le côté de la collerette d'extrémité (45) situé à l'opposé de la bague d'étanchélté (46), le ressort de compression axial (48) reposant sur l'autre extrémité de cette bague d'appui.

14. Soupape de commande d'eau selon l'une quelconque des revendications 1 à 13, caractérisée par un plateau de tamis plan (50) disposé rigidement dans la partie de carter (19) contenant les chambres d'arrivée et de sortie (14 et 15) avec l'orifice de passage (16), tamis présentant un orifice de traversée (51) traversé par la tige de poussée (24) avec un jeu de mouvement.

15. Soupape de commande d'eau selon la revendication 14, caractérisée en ce que le plateau de tamis (50) est maintenu bloqué entre la collerette d'extrémité (45) de la douille de guidage (34) et le siège (47) du carter.

16. Soupape de commande d'eau selon l'une quelconque des revendications 14 ou 15, caractérisée en ce qu'un plateau de butée (52), de préférence en matière élastique, par exemple en caoutchouc, est fixé sur la tige de poussée (24) à proximité de l'obturateur de soupape (17) à distance axiale de celui-ci, plateau venant, dans la position d'ouverture de la tige de poussée (24) avec l'obturateur de soupape (17), buter en direction axiale sur le carter (11, 18, 19) et/ou sur le plateau de tamis (50) et étant agencé en tant que limitation de course dans la position d'ouverture.

17. Soupape de commande d'eau selon la revendication 16, caractérisée en ce que le plateau de butée (52) est agencé en tant que plateau de commande auxiliaire produisant pendant la fermeture de la soupape de commande une servo-action qui maintient le débit de passage relativement constant pour une pression d'eau élevée.

18. Soupape de commande d'eau selon la revendication 16 ou 17, caractérisée par un organe d'appui (53) disposé dans le domaine axial entre le plateau de tamis (50) et l'extrémité du noyau magnétique (27) dirigée vers ce dernier, organe s'appuyant par une extrémité sur le carter (11, 19, 34, 43) à distance radiale du noyau magnétique (27) et formant par son autre extrémité une surface d'appui pour le plateau de tamis (50).

19. Soupape de commande d'eau selon la revendication 18, caractérisée en ce que l'organe d'appui (53) est agencé en tant qu'entretoise sensiblement en cuvette, disposée dans le volume intérieur limité par la partie annulaire (44) de la douille de guidage (34) et s'appuyant en direction axiale par un bord d'extrémité sur l'épaulement annulaire (43) de la douille de guidage (34), tandis qu'elle forme par son fond la surface d'appui pour le plateau de tamis (50).

20. Soupape de commande d'eau selon la revendication 19, caractérisée en ce que l'entretoise (53) sensiblement en cuvette comporte dans le fond un orifice de traversée central traversé avec un jeu de mouvement par la tige de poussée (24).

21. Soupape de commande d'eau selon la revendication 19 ou 20, caractérisée en ce que l'entretoise (53) présente dans le domaine de son fond et/ou de ses côtés des orifices (54) pour le passage et l'équilibrage de l'eau.

22. Soupape de commande d'eau selon l'une quelconque des revendications 1 à 21, caractérisée en ce que l'obturateur de soupape (17) est agencé sous forme de bouchon conique en matière à élasticité de caoutchouc, par exemple en caoutchouc.

23. Soupape de commande d'eau selon l'une quelconque des revendications 1 à 22, caractérisée en ce que le ressort d'ouverture (23) est agencé en tant que ressort hélicoïdal cylindrique entourant la tige de poussée (24) et s'engageant par und extrémité dans un évidement axial annulaire (39) de l'armature plongeante (21).

24. Soupape de commande d'eau selon l'une quelconque des revendications 1 à 23, caractérisée en ce que le noyau magnétique (27) comporte du côté dirigé vers l'armature plongeante (21) un renfoncement (37) sensiblement tronconique diminuant vers l'obturateur de soupape (17), renfoncement relié aux chambres d'arrivée et de sortie (14 et 15) par un passage axial (38) traversé par la tige de poussée (24) et présentant par rapport à celle-ci un plus grand diamètre.

25. Soupape de commande d'eau selon la revendication 24, caractérisée en ce que l'armature plongeante (21) est sensiblement tronconique à son extrémité dirigée vers le renfoncement (37) et va en diminuant conformément au renfoncement (37).

26. Procédé pour fabriquer la soupape de commande d'eau selon la revendication 1, notamment pour régler la distance axiale du noyau magnétique à l'armature plongeante, caractérisé en ce qu'on introduit d'abord profondément en direction axiale le noyau magnétique (27) à partir de l'extrémité tubulaire ouverte de la douille de guidage (34) dans celle-ci et on l'approche de l'armature plongeante (21) davantage que ce qui correspond à la position axiale finale du noyau magnétique (27), en ce qu'ensuite, après montage de tous les éléments composants restants de la soupape de commande sur l'armature plongeante (21), on fait agir une force axiale pré-déterminée dans la direction de fermeture (flèche 22) de la soupape de commande, on laisse l'obturateur de soupape (17) s'appliquer avec la force prédéterminée sur le siège de soupape (26) de l'orifice de passage (16) et on le laisse prendre la force axiale sous compression élastique et en ce qu'on laisse l'armature plongeante (21) buter par son extrémité (40) dirigée vers le noyau magnétique (27) sur ce dernier (27) et on laisse le noyau magnétique (27) se déplacer en direction axiale dans sa position de réglage sous l'action de la force axiale.

27. Procédé selon la revendication 26, caractérisé en ce qu'on produit la force axiale prédéterminée en excitant la bobine électromagnétique (20), de préférence par impulsions, par un courant accru, plus élevé que le courant de service normal et on laisse l'armature plongeante (21), ainsi sollicitée avec une énergie de butée élevée en direction de fermeture (flèche 22), buter contre le noyau magnétique (27.

28. Procédé selon la revendication 26, caractérisé en ce qu'on fait agir la force axiale prédéterminée sur l'armature plongeante (21) en tant que force extérieure par une ouverture dans le fond de la douille de guidage (34) et après ajustage terminé du noyau magnétique (27), on ferme l'ouverture de façon étanche.

29. Procédé selon l'une quelconque des revendications 26 à 28, caractérisé en ce qu'avant, pendant ou après, l'enfoncement du noyau magnétique (27) dans la douille de guidage (34), on dispose entre les deux un agent de fixation durcissant après le réglage.

0 010 683

15